# EUROPEAN PATENT APPLICATION

(11) **EP 4 716 057 A1**
(43) Date of publication of application: **25.03.2026**
(21) Application number: 25201748.8
(22) Date of filing: 11.09.2025
(51) Int. Cl.: H02J 7/00, H01M 10/42, H01M 10/44

(54) **ELECTRONIC DEVICE, METHOD FOR MANUFACTURING ELECTRONIC DEVICE, AND BATTERY REPLACEMENT METHOD**

(30) Priority: 24.09.2024 JP 2024165055
(71) Applicant: Seiko Epson Corporation, Tokyo 160-8801 (JP)
(72) Inventor: MATSUDA, Kinya, Suwa-shi, Nagano, 392-8502 (JP)
(74) Representative: MERH-IP Matias Erny Reichl Hoffmann Patentanwälte PartG mbB

(57) **Abstract**

An electronic device includes a replaceable battery and a charging device that charges the battery. The charging device includes a nonvolatile memory, a control circuit that performs charging control using a charging profile selected based on selection information from a plurality of charging profiles corresponding to batteries of a plurality of model numbers stored in the nonvolatile memory, and a charging circuit that charges the battery, based on the charging control.

## Description

The present application is based on, and claims priority from JP Application Serial Number 2024-165055, filed September 24, 2024, the disclosure of which is hereby incorporated by reference herein in its entirety.

### BACKGROUND

### 1. Technical Field

The present disclosure relates to an electronic device, a method for manufacturing an electronic device, a battery replacement method, and the like.

### 2. Related Art

JP-T-2020-534781 discloses a charging station for charging an autonomous robot including a battery. When the autonomous robot is coupled to the charging station, the charging station receives an identifier indicating the type of the battery from the autonomous robot and charges the autonomous robot according to the charging profile.

JP-T-2020-534781 is an example of the related art.

In an electronic device, batteries of different model numbers may be used at the time of manufacturing or repair such as battery replacement. That is, with an electronic device in which a replaceable battery is incorporated, there are cases where the model number of the battery to be incorporated changes at the time of manufacturing or repair, but a technique for appropriately coping with such cases is not proposed.

### SUMMARY

An aspect of the present disclosure relates to an electronic device including: a replaceable battery; and a charging device configured to charge the battery, the charging device including: a nonvolatile memory; a control circuit configured to perform charging control according to a charging profile selected based on selection information, from a plurality of charging profiles corresponding to batteries of a plurality of model numbers stored in the nonvolatile memory; and a charging circuit configured to charge the battery, based on the charging control.

Another aspect of the present disclosure relates to a method for manufacturing an electronic device including a replaceable battery and a charging device configured to charge the battery, the charging device including: a nonvolatile memory; a control circuit configured to perform charging control according to a charging profile selected based on selection information, from a plurality of charging profiles corresponding to batteries of a plurality of model numbers stored in the nonvolatile memory; and a charging circuit configured to charge the battery, based on the charging control, the method including: setting, in the charging device, the selection information for selecting a first charging profile corresponding to a battery of a first model number when the battery of the first model number is incorporated in the electronic device; and setting, in the charging device, the selection information for selecting a second charging profile corresponding to a battery of a second model number when the battery of the second model number is incorporated in the electronic device.

Still another aspect of the present disclosure relates to a battery replacement method for an electronic device including a replaceable battery and a charging device configured to charge the battery, the charging device including: a nonvolatile memory; a control circuit configured to perform charging control according to a charging profile selected based on selection information, from a plurality of charging profiles corresponding to batteries of a plurality of model numbers stored in the nonvolatile memory; and a charging circuit configured to charge the battery, based on the charging control by the control circuit, the method including: setting, in the charging device, the selection information for selecting a second charging profile corresponding to a battery of a second model number instead of the selection information for selecting a first charging profile corresponding to a battery of a first model number, when the battery of the electronic device is changed from the battery of the first model number to the battery of the second model number.

### BRIEF DESCRIPTION OF THE DRAWINGS

FIG. 1 shows a configuration example of an electronic device according to an embodiment.
FIG. 2 shows a detailed configuration example of the electronic device.
FIG. 3 shows a configuration example of a charging circuit.
FIG. 4 illustrates a technique for setting selection information using a nonvolatile memory.
FIG. 5 illustrates a technique for setting selection information by terminal setting.
FIG. 6 shows an example of a charging profile and a discharging profile.
FIG. 7 shows a charging control flow of standard charging.
FIG. 8 shows a charging control flow of fast charging.
FIG. 9 shows a charging control flow of rapid charging.
FIG. 10 illustrates a temperature management setting of constant-current charging.
FIG. 11 illustrates a temperature management setting of constant-voltage charging.
FIG. 12 illustrates a management setting based on a charging history.
FIG. 13 is a flowchart illustrating operations according to the embodiment.
FIG. 14 is a flowchart illustrating a method for manufacturing the electronic device according to the embodiment.
FIG. 15 is a flowchart illustrating a battery replacement method for the electronic device according to the embodiment.

### DESCRIPTION OF EMBODIMENTS

An embodiment will now be described. The present embodiment described below does not unduly limit the contents described in the claims. Also, not all the configurations described in the embodiment are necessarily essential elements.

### 1. Electronic Device

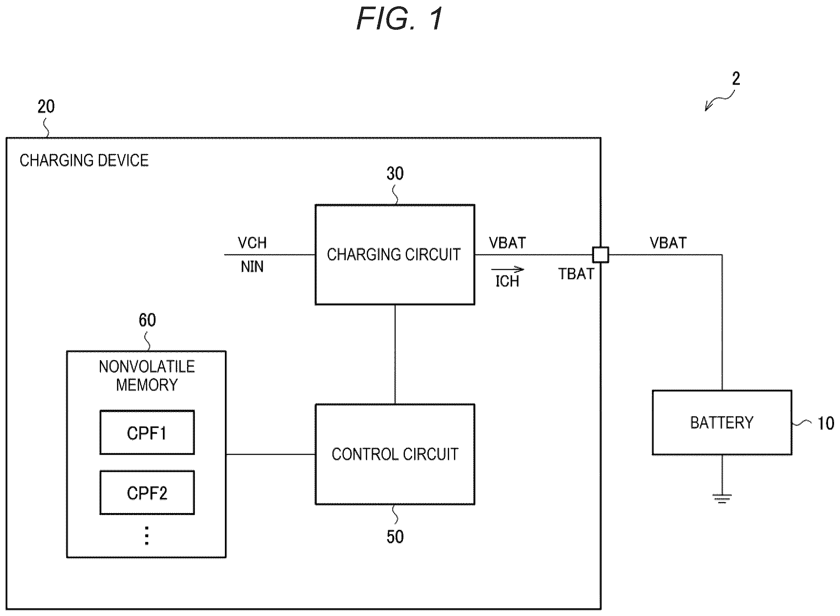

FIG. 1 shows a configuration example of an electronic device 2 according to the present embodiment. The electronic device 2 includes a charging device 20 and a battery 10. The battery 10 is, for example, a replaceable battery. For example, the battery 10 can be replaced at the time of manufacturing the electronic device 2 or at the time of repair such as battery replacement. The charging device 20 is configured to charge the battery 10 and includes a charging circuit 30, a control circuit 50, and a nonvolatile memory 60. Note that the electronic device 2 and the charging device 20 are not limited to the configuration in FIG. 1, and various modified implementations such as omitting a part of the elements thereof or adding other elements thereto can be made.

The electronic device 2 is, for example, a hearable device such as a hearing aid or an earphone for audio listening, or a wearable device. The earphone is, for example, what is called a wireless earphone. Note that, as the electronic device 2, various devices such as a head-mounted display, a portable communication terminal such as a smartphone or a mobile phone, a wristwatch, a biological information measurement device, a shaver, an electric toothbrush, a wrist computer, a handheld terminal, or an in-vehicle device of an automobile can be assumed.

The charging device 20 is a device that charges the battery 10, and can be implemented by a circuit device called an IC, for example. The charging device 20 may be configured by separately providing an IC that implements the charging circuit 30 and the control circuit 50 and an IC that implements the nonvolatile memory 60. The battery 10 which is a charging target is, for example, a secondary battery, such as a lithium-ion secondary battery, a nickel-hydrogen rechargeable battery, or a nickel-cadmium rechargeable battery. Also, the battery 10 may be implemented by a supercapacitor or the like. The battery 10 is coupled to a terminal TBAT of the charging device 20. The terminal TBAT is implemented by, for example, an external connection terminal or a pad of a circuit device that implements the charging device 20. For example, the external connection terminal is a terminal provided in the package of the circuit device. Meanwhile, in the pad region, a metal layer is exposed from a passivation film, which is an insulating layer, and the exposed metal layer forms the pad. Note that the coupling in the present embodiment is electrical coupling. The electrical coupling means coupling in which an electrical signal can be transmitted and in which information can be transmitted with an electrical signal. The electrical coupling may be coupling through a passive element and the like.

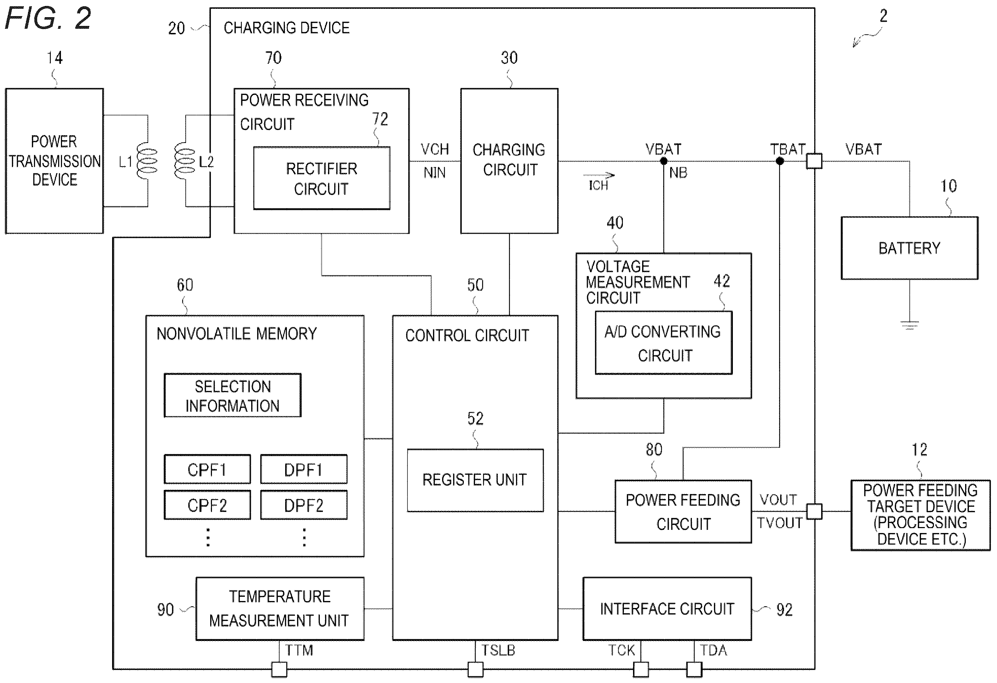

The charging circuit 30 charges the battery 10. For example, the charging circuit 30 charges the battery 10 with power received via a charging voltage VCH supplied to a node NIN. The charging voltage VCH is a power supply voltage for charging. For example, the charging circuit 30 generates a charging current ICH based on the charging voltage VCH and thus charges the battery 10. Specifically, the charging circuit 30 charges the battery 10 by constant-current charging or CCCV charging. The constant-current charging is CC charging. In the CCCV charging, the charging circuit 30 first performs the constant-current charging (CC charging) of the battery 10 and then switches to constant-voltage charging (CV charging) to charge the battery 10. For example, the battery 10 is charged by constant-current charging, and when a battery voltage VBAT reaches a predetermined voltage, the constant-current charging is switched to constant-voltage charging. Note that the power received via the charging voltage VCH may be power received using contactless power transmission as illustrated in FIG. 2, described later, or may be power received using contact power transmission via a wire. Also, the charging voltage VCH is, for example, 5 V to 4 V, and the battery voltage VBAT is, for example, 4.3 V to 3.6 V.

The control circuit 50 performs various types of control processing and arithmetic processing. For example, the control circuit 50 controls the charging circuit 30 and performs the read control and write control of the nonvolatile memory 60. The control circuit 50 can be implemented by, for example, an application-specific integrated circuit (ASIC) using automatic layout and wiring such as a gate array, but may be implemented by a processor such as a digital signal processor (DSP), a central processing unit (CPU), or a microcontroller.

The nonvolatile memory 60 is a memory that can hold stored contents even when no power is supplied from outside. The nonvolatile memory 60 can be implemented by, for example, an electrically erasable programmable read-only memory (EEPROM) in which data can be electrically erased, a one-time programmable (OTP) memory using a floating gate avalanche injection MOS (FAMOS) or the like. The nonvolatile memory 60 may be a memory built in the circuit device that implements the charging device 20, or may be a memory provided outside the circuit device that implements the charging device 20.

In the present embodiment, the control circuit 50 reads a charging profile from the nonvolatile memory 60 and performs the charging control. For example, the control circuit 50 performs the charging control using a charging profile selected based on selection information from a plurality of charging profiles CPF1, CPF2, and the like corresponding to batteries of a plurality of model numbers stored in the nonvolatile memory 60. The charging circuit 30 charges the battery 10, based on the charging control using the charging profile. For example, the charging control of the battery 10 is performed by the control circuit 50 controlling the charging circuit 30, based on the information of the selected charging profile.

The model number is for distinguishing products of different models, for example, at the stage of production, design, or the like, and is implemented by identification information or a symbol for classifying which model the product is. The model number may distinguish products manufactured by the same manufacturer or may distinguish products manufactured by different manufacturers.

The charging profile is information including various parameters for the charging control of the battery of the corresponding model number. For example, the charging profile is set, based on the battery characteristics such as the charging characteristics of the battery of the corresponding model number. For example, the charging profile of a battery of a first model number and the charging profile of a battery of a second model number are different, and include different parameters from each other for performing optimal charging control. That is, the charging profile of the battery of the first model number is set, based on the battery characteristics such as the charging characteristics of the battery of the first model number, and the charging profile of the battery of the second model number is set based on the battery characteristics such as the charging characteristics of the battery of the second model number. In the present embodiment, the charging profile CPF1 corresponding to the battery of the first model number and the charging profile CPF2 corresponding to the battery of the second model number are stored in the nonvolatile memory 60. CPF1 is a first charging profile, and CPF2 is a second charging profile. Charging profiles corresponding to three or more different model numbers may be stored in the nonvolatile memory 60. When the battery 10 of the first model number is incorporated in the electronic device 2, the control circuit 50 selects the charging profile CPF1 corresponding to the battery 10 of the first model number, based on the selection information, reads the charging profile CPF1 from the nonvolatile memory 60, and performs the charging control using the read charging profile CPF1. When the battery 10 of the second model number is incorporated in the electronic device 2, the control circuit 50 selects the charging profile CPF2 corresponding to the battery 10 of the second model number, based on the selection information, reads the charging profile CPF2 from the nonvolatile memory 60, and performs the charging control using the read charging profile CPF2.

As described above, the electronic device 2 according to the present embodiment includes the replaceable battery 10 and the charging device 20 that charges the battery 10. The charging device 20 includes the nonvolatile memory 60, the control circuit 50, and the charging circuit 30. The control circuit 50 performs the charging control using a charging profile selected based on selection information from a plurality of charging profiles CPF1, CPF2, and the like corresponding to batteries of a plurality of model numbers stored in the nonvolatile memory 60. The charging circuit 30 charges the battery 10, based on the charging control by the control circuit 50.

In this way, when the battery 10 incorporated in the electronic device 2 is the battery of the first model number, the charging profile corresponding to the first model number is selected, based on the selection information, from the plurality of charging profiles CPF1, CPF2, and the like stored in the nonvolatile memory 60. When the battery 10 incorporated in the electronic device 2 is the battery of the second model number, the charging profile corresponding to the second model number is selected, based on the selection information, from the plurality of charging profiles CPF1, CPF2, and the like stored in the nonvolatile memory 60. Then, the charging control of the battery 10 is performed, based on the charging profile thus selected. Thus, appropriate charging control according to the model number of the battery 10 incorporated in the electronic device 2 can be implemented.

FIG. 2 shows a detailed configuration example of the electronic device 2 according to the present embodiment. FIG. 2 shows a configuration example of wireless charging in which the battery 10 is charged, based on the power received via contactless power transmission. In FIG. 2, the charging device 20 includes a voltage measurement circuit 40, a power receiving circuit 70, and a power feeding circuit 80 in addition to the charging circuit 30, the control circuit 50, and the nonvolatile memory 60. The charging device 20 may include a temperature measurement unit 90 and an interface circuit 92. Note that the electronic device 2 and the charging device 20 are not limited to the configuration in FIG. 2, and various modified implementations such as omitting a part of the elements thereof or adding other elements thereto can be made.

The voltage measurement circuit 40 measures the battery voltage VBAT. The battery voltage VBAT is, for example, the voltage of the positive electrode of the battery 10. For example, the voltage measurement circuit 40 measures the battery voltage VBAT at a node NB, which is the charging node of the battery 10. The voltage measurement circuit 40 includes an A/D converting circuit 42. The A/D converting circuit 42 performs A/D conversion of the battery voltage VBAT at the node NB and outputs digital data acquired by the A/D conversion to the control circuit 50.

The power receiving circuit 70 contactlessly receives transmitted power from a power transmission device 14. That is, the power receiving circuit 70 wirelessly receives power. For example, a primary coil L1 is disposed at the power transmission device 14 side, and a secondary coil L2 is disposed at the power receiving device side implemented by the charging device 20. The power transmission device 14 is provided at, for example, a charging stand or a charging case for charging the electronic device 2. As a power transmission driver of the power transmission device 14 applies an AC voltage to the primary coil L1, the power is transmitted from the primary coil L1 to the secondary coil L2. The power receiving circuit 70 receives the power from the power transmission device 14. Specifically, the power receiving circuit 70 converts an AC induced voltage in the secondary coil L2 into a DC rectified voltage. This conversion is performed by a rectifier circuit 72 provided in the power receiving circuit 70. The rectifier circuit 72 can be implemented by, for example, a plurality of transistors or diodes. The charging circuit 30 charges the battery 10, based on the charging voltage VCH, which is the rectified voltage.

The nonvolatile memory 60 stores a plurality of charging profiles CPF1, CPF2, and the like corresponding to batteries of a plurality of model numbers and a plurality of discharging profiles DPF1, DPF2, and the like corresponding to batteries of a plurality of model numbers. In this case, the charging profile and the discharging profile may be stored as an integrated charging and discharging profile. The nonvolatile memory 60 can also store selection information for selecting a charging profile or a discharging profile corresponding to the model number of the battery 10 from the plurality of charging profiles CPF1, CPF2, and the like and the plurality of discharging profiles DPF1, DPF2, and the like.

The discharging profile is information including various parameters of the discharging control of the battery of the corresponding model number. For example, the discharging profile is set, based on the battery characteristics such as the discharging characteristics of the battery of the corresponding model number. For example, the discharging profile of a battery of a first model number and the discharging profile of a battery of a second model number are different, and include different parameters from each other for performing optimal discharging control. That is, the discharging profile of the battery of the first model number is set, based on the battery characteristics such as the discharging characteristics of the battery of the first model number, and the discharging profile of the battery of the second model number is set based on the battery characteristics such as the discharging characteristics of the battery of the second model number. In FIG. 2, the discharging profile DPF1 corresponding to the battery of the first model number and the discharging profile DPF2 corresponding to the battery of the second model number are stored in the nonvolatile memory 60. DPF1 is a first discharging profile, and DPF2 is a second discharging profile. Discharging profiles corresponding to three or more different model numbers may be stored in the nonvolatile memory 60. When the battery 10 of the first model number is incorporated in the electronic device 2, the control circuit 50 selects the discharging profile DPF1 corresponding to the battery 10 of the first model number, based on the selection information, reads the discharging profile DPF1 from the nonvolatile memory 60, and performs the discharging control using the read discharging profile DPF1. When the battery 10 of the second model number is incorporated in the electronic device 2, the control circuit 50 selects the discharging profile DPF2 corresponding to the battery 10 of the second model number, based on the selection information, reads the discharging profile DPF2 from the nonvolatile memory 60, and performs the discharging control using the read discharging profile DPF2.

The control circuit 50 includes a register unit 52. The register unit 52 stores various information. The control circuit 50 operates, based on information such as data and commands stored in the register unit 52. The register unit 52 can be implemented by, for example, a flip-flop circuit or a memory such as a RAM. The register unit 52 stores various information, for example, by loading the information read from the nonvolatile memory 60. The register unit 52 stores information input from outside via the interface circuit 92. Alternatively, a communication circuit, not illustrated, that communicates with the power transmission device 14 may be provided in the charging device 20, and the register unit 52 may store the information received from the power transmission device 14 by the communication circuit.

For example, a charging profile or a discharging profile selected from the plurality of charging profiles CPF1, CPF2, and the like and the plurality of discharging profiles DPF1, DPF2, and the like is loaded into the register unit 52 from the nonvolatile memory 60. In this case, a charging and discharging profile formed by integrating the charging profile and the discharging profile may be loaded into the register unit 52 from the nonvolatile memory 60. The control circuit 50 performs the charging control and the discharging control, based on the charging profile, the discharging profile, or the charging/discharging profile loaded in the register unit 52.

In FIG. 2, the selection information used for selecting the charging profile or the discharging profile is stored in the nonvolatile memory 60, but the selection information may be set, based on the setting of a terminal TSLB as described later.

The power feeding circuit 80 performs a discharging operation of the battery 10 to supply a power supply voltage based on the discharging operation to a power feeding target device 12. The power feeding target device 12 is, for example, a processing device such as a microcomputer provided in the electronic device 2. Specifically, the power feeding circuit 80 operates, using the battery voltage VBAT of the battery 10 as a power supply voltage. Then, the power feeding circuit 80 outputs an output voltage VOUT based on the battery voltage VBAT, as the power supply voltage of the power feeding target device 12. For example, the power feeding circuit 80 includes a charge pump circuit, a switching regulator circuit, or the like, and the charge pump circuit or the switching regulator circuit performs a charge pump operation or a switching regulation operation of stepping down the battery voltage VBAT, and supplies the output voltage VOUT acquired by stepping down the battery voltage VBAT, to the power feeding target device 12 via a terminal TVOUT.

The charging device 20 is provided with a charging-system circuit and a discharging-system circuit. The charging-system circuit operates, based on the received power, and charges the battery 10 as the charging target. For example, the charging-system circuit is supplied with the received power with the charging voltage VCH, and operates, based on the charging voltage VCH to charge the battery 10. Meanwhile, the discharging-system circuit operates, based on the battery voltage VBAT of the battery 10. That is, each circuit provided in the discharging-system circuit operates using the battery voltage VBAT as the power supply voltage. The power feeding circuit 80 provided as the discharging-system circuit outputs the output voltage VOUT based on the battery voltage VBAT, as the power supply voltage of the power feeding target device 12.

Also, a control circuit for the charging system and a control circuit for the discharging system are provided as the control circuit 50. The control circuit for the discharging system is arranged to be able to operate with the battery voltage VBAT as the power supply voltage even when no power is received by the power receiving circuit 70.

The temperature measurement unit 90 measures the temperature of the battery 10. The control circuit 50 performs the charging control and the discharging control of the battery 10, based on the result of the temperature measurement by the temperature measurement unit 90. For example, the charging device 20 is provided with a terminal TTM for coupling a temperature sensor such as a thermistor, and the temperature measurement unit 90 measures the temperature of the battery 10, using the temperature sensor coupled to the terminal TTM. For example, when the temperature sensor is a thermistor, the temperature measurement unit 90 measures the temperature, based on the current flowing through the thermistor. The temperature sensor is not limited to the thermistor, and various sensors such as a temperature sensor using a thermocouple and a semiconductor-type temperature sensor can be used. The temperature sensor may be provided outside the circuit device (IC) that implements the charging device 20, or may be built in the circuit device.

The interface circuit 92 is a circuit for communicating with an external processing device or the like. For example, the interface circuit 92 performs communication based on a given communication standard with an external processing device. For example, the interface circuit 92 performs serial communication by an inter-integrated circuit (I2C), a serial peripheral interface (SPI), or the like. For example, the charging device 20 is provided with a serial clock terminal TCK and a serial data terminal TDA, and serial communication can be implemented using these terminals TCK and TDA.

In this way, in FIG. 2, the charging device 20 includes the power feeding circuit 80 supplying power to the power feeding target device 12, based on the battery voltage VBAT of the battery 10. The control circuit 50 controls the power supply by the power feeding circuit 80 according to the discharging profile selected based on the selection information from the plurality of discharging profiles DPF1, DPF2, and the like corresponding to the batteries of the plurality of model numbers stored in the nonvolatile memory 60. In this way, when performing power supply to the power feeding target device 12 based on the battery voltage VBAT, the discharging control of the battery 10 based on an appropriate discharging profile according to the model number of the battery 10 is performed and the power supply can thus be implemented.

The discharging profile in this case can include, for example, a voltage threshold for discharge stop determination. In this way, when performing power supply to the power feeding target device 12 by discharging the battery 10, the discharging of the battery 10 can be stopped using the voltage threshold for discharge stop determination. Thus, for example, a situation where the battery 10 is excessively discharged can be prevented, and appropriate discharging control of the battery 10 can be implemented.

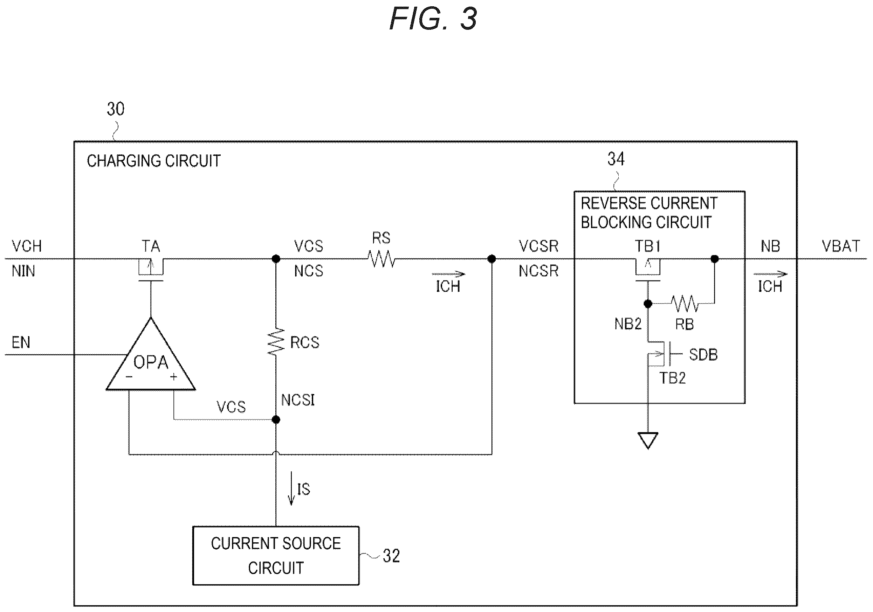

FIG. 3 shows a configuration example of the charging circuit 30. As shown in FIG. 3, the charging circuit 30 includes a current source circuit 32, an amplifier circuit OPA, a reverse current blocking circuit 34, a transistor TA, and resistors RCS, RS. The amplifier circuit OPA can also be called an operational amplifier. Note that the charging circuit 30 is not limited to the configuration shown in FIG. 3, but various modified implementations such as omitting a part of the elements thereof or adding other elements thereto can be made.

The current source circuit 32 outputs an output current IS based on a reference voltage. The output current IS is a current source current generated by the current source circuit 32. The output current IS is supplied to a non-inverting input terminal of the amplifier circuit OPA and a node NCS at the drain side of the P-type transistor TA. Then, based on the output current IS, the charging current ICH is generated by the amplifier circuit OPA, the transistor TA, and the resistors RS, RCS.

The source of the transistor TA is coupled to the node NIN, and the drain thereof is coupled to the node NCS. The node NIN is supplied with the charging voltage VCH. The resistor RCS is disposed between the node NCS and a node NCSI. The resistor RS is disposed between the node NCS and a node NCSR. The non-inverting input terminal of the amplifier circuit OPA is coupled to the node NCSI, the inverting input terminal is coupled to the node NCSR, and the output terminal is coupled to the gate of the transistor TA. The operation of the amplifier circuit OPA is enabled when an enable signal EN is at a low level. Thus, the charging current ICH (where ICH=(RCS/RS)×IS) is supplied to the node NCSR, and is supplied as the charging current ICH to the node NB, which is the charging node.

The reverse current blocking circuit 34 includes a P-type transistor TB1, an N-type transistor TB2, and a resistor RB. The source of the transistor TB1 is coupled to the node NB, and the drain is coupled to the node NCSR. The source of the transistor TB2 is coupled to a ground node, and the drain is coupled to a node NB2 of the gate of the transistor TB1. The resistor RB is disposed between the node NB and the node NB2.

When starting the charging of the battery 10, the control circuit 50 turns on the transistor TB2 with a control signal SDB. Thus, the transistor TB1 is also turned on, the charging current ICH flows from the node NCSR to the node NB, and the battery 10 is charged. When ending the charging of the battery 10, the control circuit 50 turns off the transistor TB2 with the control signal SDB. Thus, the transistor TB1 is also turned off, and the reverse current blocking circuit 34 prevents the backflow of electric charge from the battery 10 to the charging circuit 30.

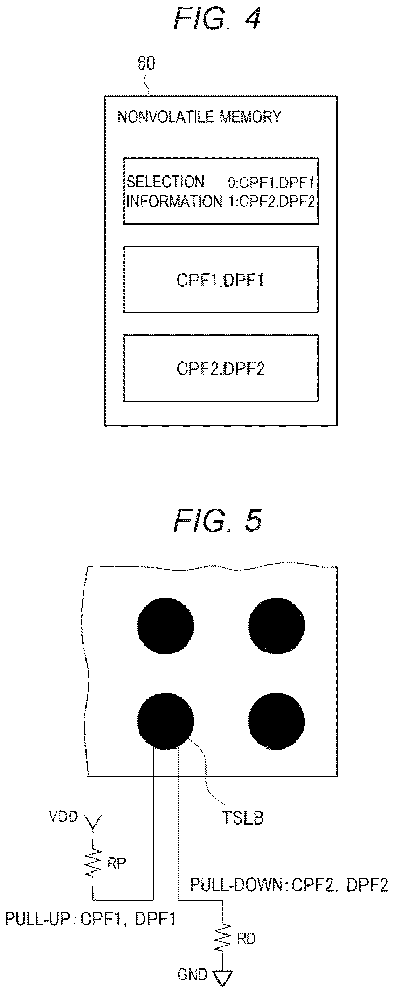

FIGS. 4 and 5 illustrate a method for setting the selection information. In the present embodiment, the selection information is set at the time of manufacturing the electronic device 2 or at the time of battery replacement. In this way, the charging profile or the discharging profile corresponding to the battery 10 incorporated in the electronic device 2 is selected from the plurality of charging profiles or the plurality of discharging profiles, based on the selection information set at the time of manufacturing the electronic device 2 or at the time of battery replacement, and the battery 10 can be charged or discharged accordingly.

Specifically, in FIG. 4, the selection information is stored in the nonvolatile memory 60. The writing of the selection information to the nonvolatile memory 60 is performed at the time of manufacturing the electronic device 2 or at the time of battery replacement. For example, when a selection bit, which is the selection information stored in the nonvolatile memory 60, is 0, the charging profile CPF1 or the discharging profile DPF1 for the battery of the first model number is selected. When the selection bit, which is the selection information, is 1, the charging profile CPF2 or the discharging profile DPF2 for the battery of the second model number is selected. For example, in the nonvolatile memory 60, a first storage area for storing the charging profile CPF1 and the discharging profile DPF1 for the battery of the first model number and a second storage area for storing the charging profile CPF2 and the discharging profile DPF2 for the battery of the second model number are secured in advance. When the selection bit, which is the selection information, is 0, the control circuit 50 accesses the address of the first storage area and reads the charging profile CPF1 and the discharging profile DPF1. When the selection bit, which is the selection information, is 1, the control circuit 50 accesses the address of the second storage area and reads the charging profile CPF2 and the discharging profile DPF2. In this way, the selection information is stored in the nonvolatile memory 60, which can hold the stored content even when there is no power supply from outside, and at the time of charging, the charging profile corresponding to the battery 10 incorporated in the electronic device 2 is selected from the plurality of charging profiles, based on the selection information, and the battery 10 can be charged accordingly. Alternatively, the discharging profile corresponding to the battery 10 incorporated in the electronic device 2 is selected from the plurality of discharging profiles, based on the selection information, and the battery 10 can be discharged accordingly.

The selection bit, which is the selection information, may be a plurality of bits, and thus a charging profile or a discharging profile corresponding to the model number of the battery 10 can be selected from three or more charging profiles or three or more discharging profiles. The writing of the selection information to the nonvolatile memory 60 is performed, for example, at the time of manufacturing the electronic device 2 or the charging device 20.

In FIG. 5, the selection information is set, based on the terminal setting of the charging device 20. The setting of the selection information based on the terminal setting is performed, for example, at the time of manufacturing the electronic device 2 or at the time of battery replacement. For example, when the terminal TSLB of the charging device 20 is pulled up, the charging profile CPF1 or the discharging profile DPF1 for the battery of the first model number is selected. When the terminal TSLB of the charging device 20 is pulled down, the charging profile CPF2 or the discharging profile DPF2 for the battery of the second model number is selected. For example, when a pull-up resistor RP is provided at the circuit board where the circuit device of the charging device 20 is mounted and the other end of the resistor RP having one end coupled to VDD is coupled to the terminal TSLB, the pull-up of the terminal TSLB can be implemented. Meanwhile, when a pull-down resistor RD is provided at the circuit board where the circuit device of the charging device 20 is mounted and the other end of the resistor RD having one end coupled to GND is coupled to the terminal TSLB, the pull-down of the terminal TSLB can be implemented. In this way, the charging profile or the discharging profile corresponding to the battery 10 incorporated in the electronic device 2 is selected from the plurality of charging profiles or the plurality of discharging profiles, based on the selection information set by the terminal TSLB, and the battery 10 can be charged or discharged accordingly.

### 2. Selection of Charging Profile and Discharging Profile

When charging the battery, for example, one type of charging profile is set in the charging device, and the charging control of the battery is performed using the one type of charging profile. Alternatively, a main system such as a CPU controls the charging device, using a charging profile corresponding to the battery to be used.

However, there are cases where a set manufacturer of an electronic device purchases batteries from two companies from the viewpoint of procurement of batteries. In such cases, there is a problem in that the battery cannot be flexibly changed in a mass production process according to the inventory status of the battery. For example, it is assumed that batteries having the same standard and specifications but different model numbers are purchased from two companies, that is, a company A and a company B. Then, in a situation where an optimum charging profile for charging the battery of the company A is set in the charging device, when the inventory status of the battery of the company A becomes difficult and therefore the battery is to be changed to the battery of the company B in a mass production process, charging with the optimum charging profile cannot be performed. Also, there is a problem in that, when the battery needs to be replaced in the process of using the electronic device by the user, the battery cannot be flexibly changed to a battery that can be easily purchased according to the inventory status of the battery.

Therefore, in the present embodiment, two or more charging profiles and discharging profiles are set in the charging device 20, and the charging device 20 is provided with a function of selecting which charging profile or discharging profile to use.

For example, when the set manufacturer of the electronic device 2 purchases batteries from two companies from the viewpoint of procurement, the following case is conceivable. For example, this is a case where a battery is selected and mounted according to the inventory status in a mass production process, or a case where the battery is replaced with a battery according to the inventory status when the battery needs to be replaced in the process of use by the user. In such a case, since the optimum charging profile and discharging profile are different for each of the batteries of a plurality of model numbers purchased from the two companies, a plurality of charging profiles and a plurality of discharging profiles corresponding to the batteries of the plurality of model numbers are set in advance in the charging device 20. For example, the plurality of charging profiles and the plurality of discharging profiles corresponding to the batteries of the plurality of model numbers are stored in the nonvolatile memory 60. Then, the charging profile and the discharging profile corresponding to the battery to be used are selected by the selection function of the charging device 20, and the charging control and the discharging control are performed, based on the selected charging profile and discharging profile. In this way, when batteries are purchased from two companies or the like, the selection and change of the battery according to the inventory status can be performed at various timings. For example, in a mass production process, a battery can be selected according to the inventory status and incorporated into the electronic device 2, or the battery can be replaced with a battery according to the inventory status at the time of battery replacement.

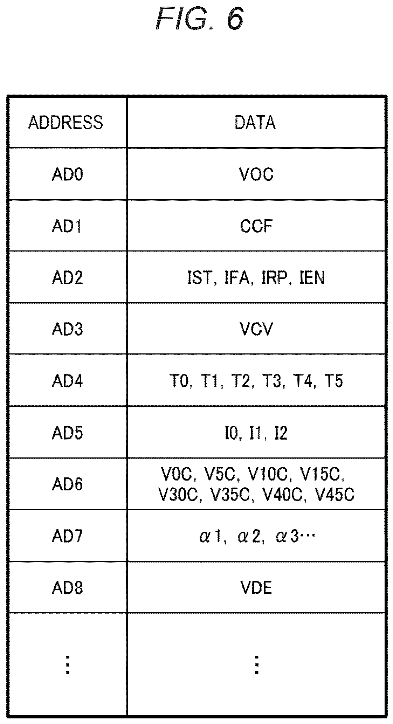

Next, a specific example of a charging profile and a discharging profile will be described. FIG. 6 shows an example of a charging profile and a discharging profile. FIG. 6 shows a charging and discharging profile formed of a charging profile and a discharging profile integrated together. Addresses AD0 to AD8 in FIG. 6 correspond to an address range in which each piece of information of the profile is stored.

In FIG. 6, the charging profile includes a voltage threshold VOC for determining overcharging. For example, the voltage threshold VOC for determining overcharging is stored at the address AD0. When the battery 10 is a lithium-ion battery, the full charge voltage is about 4.2 to 4.3 V, and the voltage threshold VOC for determining overcharging is, for example, a voltage of about the full charge voltage +0.1 V. In this way, the determination of overcharging and the charging control based on the result of the determination can be implemented, using the voltage threshold VOC for determining overcharging corresponding to the model number of the battery 10 incorporated in the electronic device 2. For example, when the battery voltage VBAT becomes equal to or higher than the voltage threshold VOC, the charging of the battery 10 can be stopped and a situation such as overcharging of the battery 10 can be prevented.

For example, in FIG. 2, the control circuit 50 performs control to stop the charging of the battery 10 by the charging circuit 30 when it is determined that the battery voltage VBAT is equal to or higher than the voltage threshold VOC, based on the result of the voltage measurement by the voltage measurement circuit 40. Specifically, in FIG. 3, the control circuit 50 turns off the transistor TB2 by the control signal SDB. Thus, the transistor TB1 is also turned off, the charging current ICH becomes zero, the charging of the battery 10 by the charging circuit 30 is stopped, and the battery 10 is prevented from being overcharged.

In FIG. 6, the charging profile includes setting information CCF of the charging control flow. For example, the setting information CCF of the charging control flow is stored at the address AD1. In this way, the charging control flow of the battery 10 is set by the setting information CCF of the charging profile, and the battery 10 can be charged accordingly. Thus, the charging control of the battery 10 in the charging control flow corresponding to the model number of the battery 10 incorporated in the electronic device 2 can be implemented. For example, the battery 10 can be charged, based on the charging control flow set by the setting information CCF, and charging can be performed, based on an appropriate charging control flow corresponding to the model number of the battery 10.

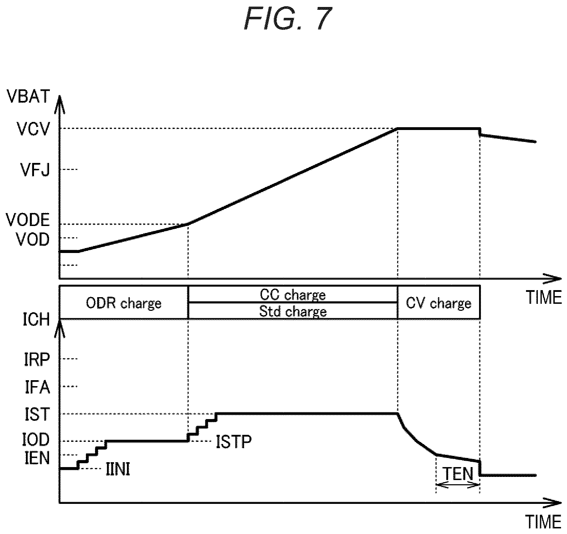

For example, FIGS. 7, 8, and 9 show examples of the charging control flow. With the setting information CCF, which of these charging control flows is to be used for charging, or the like, can be set.

FIG. 7 is a charging control flow of standard charging. First, step-up charging is performed in which the charging current ICH is increased in stages on a step-up current value ISTP basis from an initial current value IINI. When the charging current ICH reaches a target current value IST of the standard charging due to the step-up charging, constant-current charging is performed in which charging is performed with the charging current ICH having the constant target current value IST. When the battery voltage VBAT reaches VCV, constant-voltage charging with the constant voltage VCV is performed. Due to this constant-voltage charging, the charging current ICH decreases, the voltage drop in the internal resistance of the battery 10 decreases, and the battery voltage VBAT approaches the cell voltage of the battery 10. When the charging current ICH becomes equal to or lower than an end current value IEN of the charging and a predetermined time TEN passes, the control circuit 50 determines that the battery 10 is fully charged, and stops the charging.

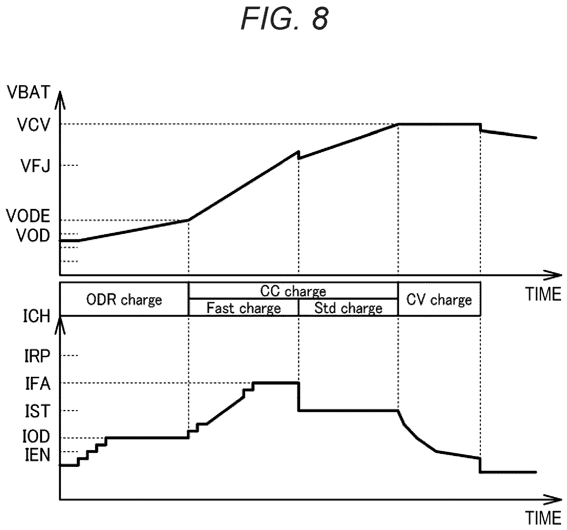

FIG. 8 is a charging control flow of fast charging. In the fast charging, before the constant-current charging of the standard charging, constant-current charging with a target current value IFA higher than the target current value IST of the standard charging is performed, for example, for a predetermined period. Thus, the battery 10 can be charged in a shorter time than in the standard charging.

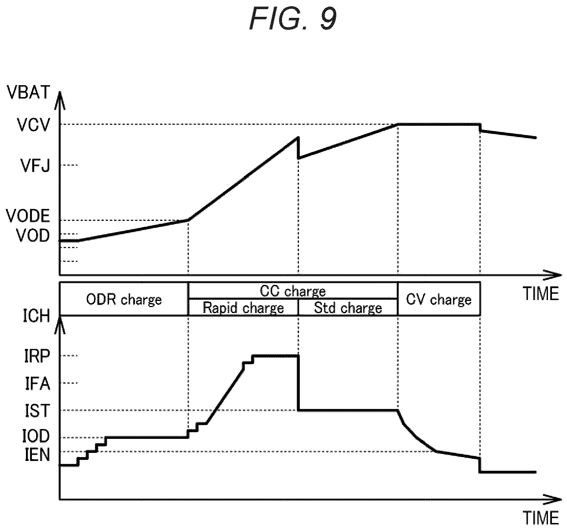

FIG. 9 is a charging control flow of rapid charging. In the rapid charging, before the constant-current charging of the standard charging, constant-current charging with a target current value IRP higher than the target current value IST of the standard charging or the target current value IFA of the fast charging is performed, for example, for a predetermined period. Thus, the battery 10 can be charged in a shorter time than in the standard charging or the fast charging.

For example, it is assumed that the rapid charging can be performed on the battery of the first model number, but only the fast charging can be performed on the battery of the second model number and the rapid charging cannot be performed thereon, whereas only the standard charging can be performed on the battery of the third model number. In this case, when the battery 10 incorporated in the electronic device 2 at the time of manufacturing or at the time of battery replacement is the battery of the first model number, the charging control flow of the rapid charging is set by the setting information CCF. When the battery 10 incorporated in the electronic device 2 at the time of manufacturing or at the time of battery replacement is the battery of the second model number, the charging control flow of the fast charging is set by the setting information CCF, and when the battery 10 is the battery of the third model number, the charging control flow of the standard charging is set by the setting information CCF.

For example, in FIG. 6, the charging profile includes the target current values IST, IFA, and IRP of the constant-current charging. For example, the target current value IST for the standard charging, the target current value IFA for the fast charging, and the target current value IRP for the rapid charging are stored at the address AD2. Also, the end current value IEN of the charging is stored. In this way, constant-current charging can be performed with the target current value corresponding to the model number of the battery 10 incorporated in the electronic device 2. For example, even batteries having the same standard and specifications may have different optimum target current values in constant-current charging according to the model number of the battery, but such a case can be appropriately handled. For example, in the charging control flows of the standard charging, the fast charging, the rapid charging or the like, constant-current charging with the target current values IST, IFA, and IRP can be performed, and constant-current charging with an appropriate target current value corresponding to the model number of the battery 10 can be performed.

In FIG. 6, the charging profile includes the value of the constant voltage VCV of the constant-voltage charging. For example, the value of the constant voltage VCV, which is a control voltage for the constant-current charging, is stored at the address AD3. For example, when the battery 10 is a lithium-ion battery, the constant voltage VCV can be set by a step of a predetermined voltage (for example, 50 mV) in a range of 3.6 V to 4.5 V. In this way, constant-voltage charging with the constant voltage VCV corresponding to the model number of the battery 10 incorporated in the electronic device 2 can be performed. For example, even batteries having the same standard and specifications may have different optimum constant voltages VCV in constant-voltage charging according to the model number of the battery, but such a case can be appropriately handled.

In FIG. 6, the charging profile includes temperature management setting information for the charging of the battery 10. For example, temperature thresholds T0, T1, T2, T3, T4, and T5 are stored at the address AD4 as the temperature management setting information, and current values 10, I1, and I2 are stored at the address of AD5. Voltages V0C, V5C, V10C, V15C, V30C, V35C, V40C, and V45C are stored at the address AD6. In this way, charging with the temperature management setting corresponding to the model number of the battery 10 incorporated in the electronic device 2 can be performed. For example, even batteries having the same standard and specifications may have different optimum temperature management settings in charging according to the model number of the battery, but such a case can be appropriately handled.

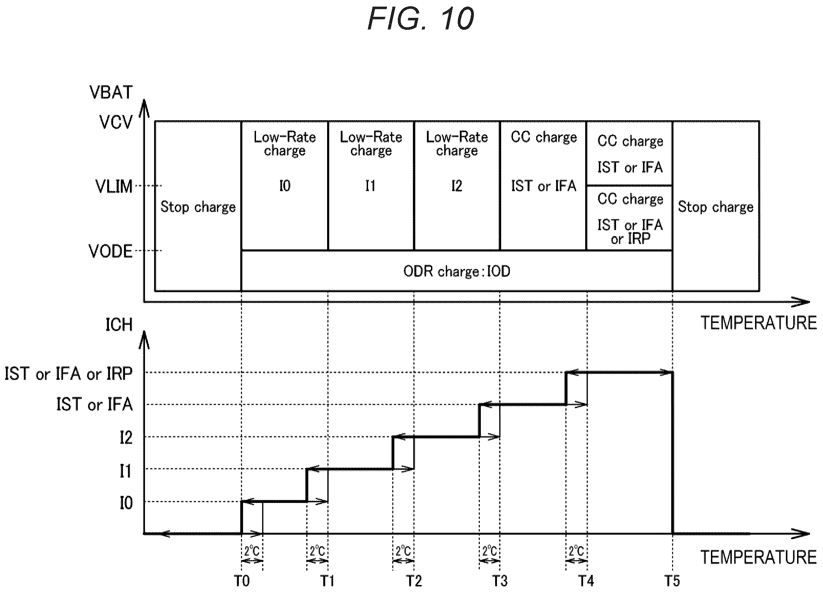

FIG. 10 illustrates an example of the temperature management setting in the constant-current charging. The temperature thresholds T0, T1, T2, T3, T4, and T5 and the current values I0, 11, and I2 in FIG. 10 are set in the charging profile as the temperature management setting information as shown in FIG. 6. T3 corresponds to, for example, 25°C which is a typical temperature.

In the temperature ranges of T0 to T1, T1 to T2, and T2 to T3, where the temperatures are low, low-rate constant-current charging using I0, I1, and I2 as the target current values is performed. In a temperature range of T3 to T4, constant-current charging of the standard charging using IST as the target current value or constant-current charging of the fast charging using IFA as the target current value is performed. When in a temperature range of T4 to T5 and the battery voltage VBAT is higher than VLIM, constant-current charging of the standard charging using IST as the target current value or the fast charging using IFA as the target current value is performed. Meanwhile, when in the temperature range of T4 to T5 and VBAT is equal to or lower than VLIM, constant-current charging of the standard charging using IST as the target current value, the fast charging using IFA as the target current value, or the rapid charging using IRP as the target current value is performed. The charging is stopped in a temperature range lower than T0 or a temperature range higher than T5. As the temperature management setting as shown in FIG. 10 is performed, constant-current charging with appropriate temperature management according to the model number of the battery 10 can be implemented.

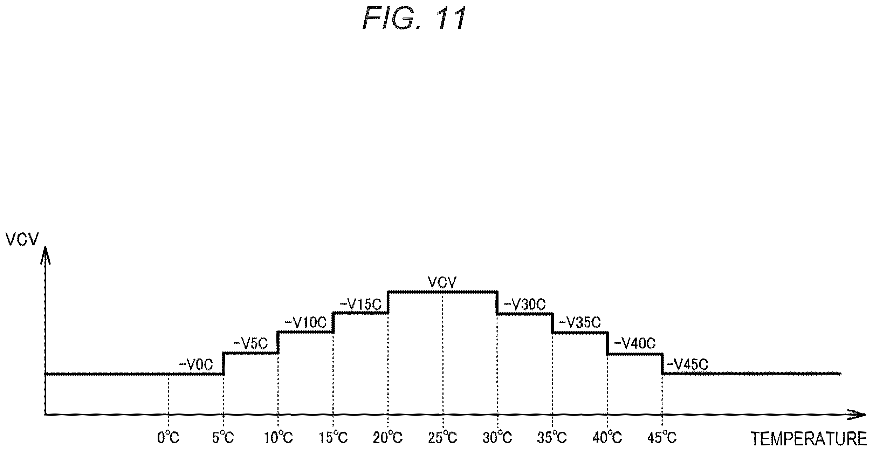

FIG. 11 illustrates an example of the temperature management setting in the constant-voltage charging. The voltages V0C, V5C, V10C, V15C, V30C, V35C, V40C, and V45C in FIG. 11 are set in the charging profile as the temperature management setting information as shown in FIG. 6. For example, in a temperature range of 20°C to 30°C, constant-voltage charging with the voltage VCV set in FIG. 6 is performed. Meanwhile, in a temperature range lower than 5°C, constant-voltage charging with a voltage of VCV-V0C is performed. In temperature ranges of 5°C to 10°C, 10°C to 15°C, and 15°C to 20°C, constant-voltage charging is performed with voltages of VCV-V5C, VCV-V10C, and VCV-V15C, respectively. In temperature ranges of 30°C to 35°C, 35°C to 40°C, and 40°C to 45°C, constant-voltage charging is performed with voltages of VCV-V30C, VCV-V35C, and VCV-V40C, respectively. In a temperature range higher than 45°C, constant-voltage charging is performed with a voltage of VCV-V45C. As the temperature management setting as shown in FIG. 11 is performed, constant-voltage charging with appropriate temperature management according to the model number of the battery 10 can be implemented.

In FIG. 6, the charging profile includes management setting information based on the charging history of the charging of the battery 10. For example, α1, α2, α3, and the like, which are management setting information based on the charging history, are stored at the address AD7.

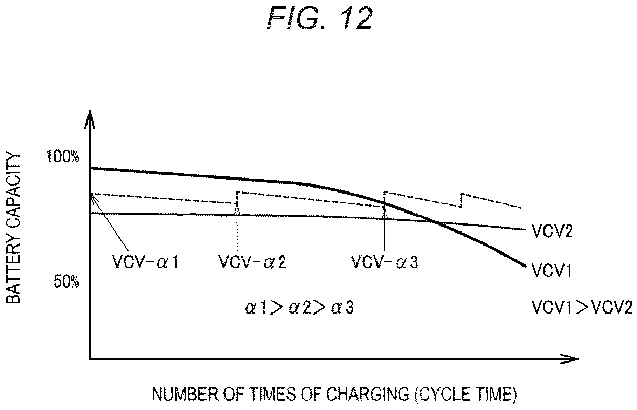

FIG. 12 illustrates an example of the management setting based on the charging history of the battery 10. In FIG. 12, the horizontal axis represents the number of times of charging, and the vertical axis represents the battery capacity. The number of times of charging is also referred to as a cycle time. When the number of times of charging increases, a deterioration of the battery 10 such as a decrease in the battery capacity occurs. For example, if charging is performed with a voltage VCV1 as shown in FIG. 12 when VCV1>VCV2, charging can be performed up to a battery capacity close to 100% when the number of times of charging is small. However, as the number of times of charging increases, the degree of decrease in the battery capacity increases as compared with the case of charging with the voltage VCV2, and the deterioration speed of the battery 10 increases.

Therefore, in FIG. 12, charging is performed with a voltage of VCV-α1 in a first number-of-times range, in which the number of times of charging is small, and charging is performed with a voltage of VCV-α2 in a second number-of-times range, in which the number of times of charging is larger than that in the first number-of-times range. In a third number-of-times range, in which the number of times is larger than that in the second number-of-times range, charging is performed with a voltage of VCV-α3. Since α1>α2>α3, a relationship of VCV-α1 < VCV-α2 < VCV-α3 is established. In this way, as shown in FIG. 12, the degree of decrease in the battery capacity when the number of times of charging increases is smaller than that in the case of charging with the voltage VCV1, and the deterioration speed of the battery 10 can be suppressed.

In this way, as the charging profile including the management setting information based on the charging history of the battery 10 is used, management setting based on an appropriate charging history according to the model number of the battery 10 incorporated in the electronic device 2 can be performed. For example, as α1, α2, and α3 in FIG. 12 are set to voltages corresponding to the model number of the battery 10, the deterioration speed of the battery 10 due to an increase in the number of times of charging can be suppressed.

In FIG. 6, the discharging profile includes a voltage threshold VDE for discharge stop determination. For example, the voltage threshold VDE for determining the discharge stop is stored at the address AD8. When the battery 10 is a lithium-ion battery, the voltage threshold VDE for determining the discharge stop is, for example, about 2.9 to 3.1 V. In this way, the determination of the discharge stop of the battery 10 and the discharging control based on the result of the determination can be implemented, using the voltage threshold VDE for determining the discharge stop corresponding to the model number of the battery 10 incorporated in the electronic device 2. For example, when the battery voltage VBAT becomes equal to or lower than the voltage threshold VDE for determining the discharge stop, the discharging of the battery 10 can be stopped and a situation such as over-discharging of the battery 10 can be prevented.

For example, in FIG. 2, the power feeding circuit 80 outputs the output voltage VOUT based on the battery voltage VBAT of the battery 10 to supply power to the power feeding target device 12. That is, power is supplied to the power feeding target device 12 by discharging the battery 10. When the battery voltage VBAT decreases due to the discharging of the battery 10, problems occur such as the battery 10 being in an over-discharged state or the power feeding circuit 80 not operating appropriately.

In this regard, if the voltage threshold VDE for discharge stop determination is set as the discharging profile, for example, when the battery voltage VBAT becomes equal to or lower than the voltage threshold VDE, the power feeding circuit 80 can stop the discharging of the battery 10 and thus stop the power supply to the power feeding target device 12 based on the battery voltage VBAT. Thus, the occurrence of a situation where the battery 10 is over-discharged or the power feeding circuit 80 does not appropriately operate due to a decrease in the battery voltage VBAT caused by discharging, can be prevented.

The discharging profile is not limited to such a voltage threshold VDE for discharge stop determination, and various profiles are conceivable. For example, when control is performed to stop the discharging of the battery 10 when the temperature of the battery 10 becomes low or high, the temperature at which the discharging is stopped may be set as the discharging profile. For example, when the discharging is stopped at a temperature TL or lower on the low temperature side and the discharging is stopped at a temperature TH or higher on the high temperature side, the temperatures TL and TH are set as different discharging profiles for each model number. In this way, control to stop the discharging of the battery 10 at a temperature corresponding to the model number of the battery 10 can be implemented.

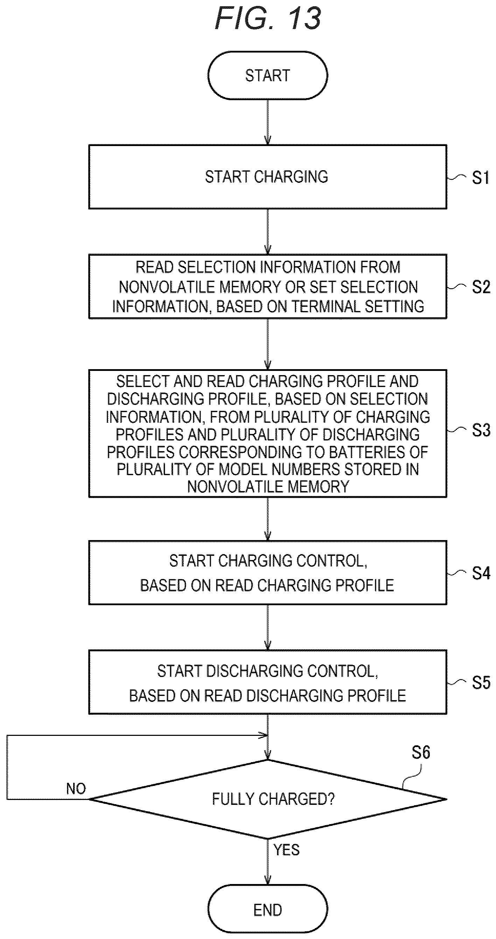

FIG. 13 is a flowchart showing operations according to the present embodiment. When the charging of the battery 10 is started, for example, the control circuit 50 reads the selection information from the nonvolatile memory 60 or sets the selection information, based on the terminal setting (steps S1 and S2). For example, when the electronic device 2 is mounted at a charging stand, a charging case, or the like, the charging of the battery 10 by the charging circuit 30 is started. Then, the control circuit 50 reads the selection information from the nonvolatile memory 60 as described with reference to FIG. 4, or sets the selection information by setting the terminal TSLB as described with reference to FIG. 5.

Next, the control circuit 50 selects and reads the charging profile and the discharging profile based on the selection information, from the plurality of charging profiles and the plurality of discharging profiles corresponding to the batteries of the plurality of model numbers stored in the nonvolatile memory 60 (step S3). For example, when the battery 10 is the battery of the first model number, the charging profile CPF1 and the discharging profile DPF1 corresponding to the first model number are read from the nonvolatile memory 60. When the battery 10 is the battery of the second model number, the charging profile CPF2 and the discharging profile DPF2 corresponding to the second model number are read from the nonvolatile memory 60. Then, the control circuit 50 starts the charging control, based on the read charging profile (step S4). For example, the control circuit 50 controls the charging circuit 30, based on the read charging profile, and the charging control of the battery 10 is thus performed, based on the charging profile. The control circuit 50 starts the discharging control, based on the read discharging profile (step S5). For example, the control circuit 50 controls the power feeding circuit 80, based on the read discharging profile, and the discharging control of the battery 10 is thus performed, based on the discharging profile. When the battery 10 is fully charged, the processing such as the charging control ends (step S6).

### 3. Method for Manufacturing Electronic Device and Method for Replacing Battery

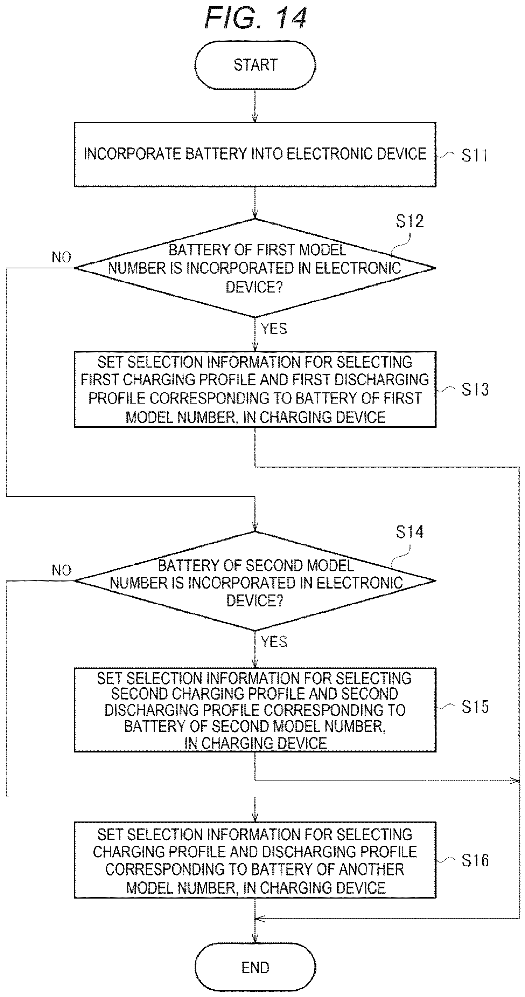

Next, a method for manufacturing the electronic device 2 and a method for replacing the battery 10 according to the present embodiment will be described. FIG. 14 is a flowchart illustrating the method for manufacturing the electronic device 2 according to the present embodiment.

First, the battery 10 is incorporated into the electronic device 2 (step S11). For example, a battery pack is mounted in the housing of the electronic device 2 by the set manufacturer of the electronic device 2. When the battery of the first model number is incorporated in the electronic device 2, the selection information for selecting the first charging profile and the first discharging profile corresponding to the battery of the first model number is set in the charging device 20, and the processing ends (steps S12 and S13). For example, as described with reference to FIGS. 4 and 5, the selection information is written to the nonvolatile memory 60, or the selection information is set by setting the terminal TSLB. Meanwhile, when the battery of the second model number is incorporated in the electronic device 2 instead of the battery of the first model number, the selection information for selecting the second charging profile and the second discharging profile corresponding to the battery of the second model number is set in the charging device 20, and the processing ends (steps S14 and S15). When a battery of another model number is incorporated, selection information for selecting a charging profile and a discharging profile corresponding to the battery of the another model number is set in the charging device 20, and the processing ends (step S16).

With the manufacturing method according to the present embodiment, the charging profile or the discharging profile corresponding to the model number of the battery 10 incorporated in the electronic device 2 is read from the nonvolatile memory 60, and the charging control or the discharging control of the battery 10 can be performed, based on the read charging profile or discharging profile. Thus, for example, even when batteries having the same standard and specifications but different model numbers are purchased from two companies, or the like, the charging control or the discharging control of the battery 10 can be performed, based on the charging profile or the discharging profile corresponding to the model number of the battery 10 incorporated according to the status of demand.

The charging profile and the discharging profile may be written into the nonvolatile memory 60 by the manufacturer of the circuit device implementing the charging device 20, or may be written into the nonvolatile memory 60 by the set manufacturer of the electronic device 2 after the circuit device is incorporated in the electronic device 2. When the set manufacturer of the electronic device 2 writes the profiles, for example, the processing device of the electronic device 2 writes the profiles into the nonvolatile memory 60 via the interface circuit 92 shown in FIG. 2. The nonvolatile memory 60 may be a memory built in the circuit device implementing the charging device 20, or may be provided as an external memory of the circuit device.

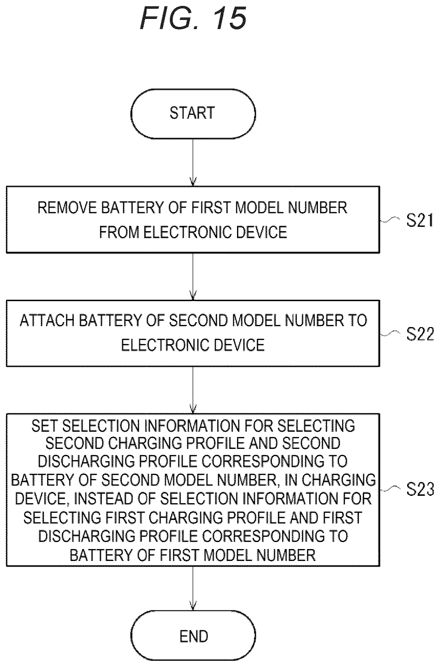

FIG. 15 is a flowchart illustrating the battery replacement method according to the present embodiment. For example, when the battery needs to be replaced due to the deterioration of the battery, the battery replacement is performed, for example, as the repair of the electronic device 2.

First, the battery of the first model number is removed from the electronic device 2 (step S21). For example, a repair worker of the manufacturer removes the battery of the first model number mounted in the housing of the electronic device 2. That is, the battery whose battery capacity is decreased due to deterioration is replaced. Then, the battery of the second model number is attached to the electronic device 2 (step S22). That is, the battery is replaced with a new battery that is not deteriorated. In this case, since there is no stock of the battery of the first model number, the battery is replaced with a battery of the second model number different from the first model number. Then, instead of the selection information for selecting the first charging profile and the first discharging profile corresponding to the battery of the first model number, the selection information for selecting the second charging profile and the second discharging profile corresponding to the battery of the second model number is set in the charging device 20 (step S23). In the example shown in FIG. 4, the selection information stored in the nonvolatile memory 60 is rewritten with the selection information for selecting the second charging profile and the second discharging profile corresponding to the battery of the second model number. In the example shown in FIG. 5, the terminal setting is changed to the terminal setting for selecting the second charging profile and the second discharging profile corresponding to the battery of the second model number. In this way, the repair work for battery replacement is completed.

With the battery replacement method according to the present embodiment, when replacing the battery of the electronic device 2 in which the battery of the first model number is incorporated, the battery of the second model number can be incorporated in the electronic device 2 instead of the battery of the first model number when the battery of the first model number is not present due to the inventory status or the like. When charging the battery 10, the charging profile and the discharging profile corresponding to the battery of the second model number are read from the nonvolatile memory 60, and the charging control and the discharging control of the battery 10 can be performed, based on the read charging profile and discharging profile.

As described above, the electronic device according to the present embodiment includes a replaceable battery and a charging device that charges the battery. The charging device includes a nonvolatile memory, a control circuit that performs charging control using a charging profile selected based on selection information from a plurality of charging profiles corresponding to batteries of a plurality of model numbers stored in the nonvolatile memory, and a charging circuit that charges the battery, based on the charging control.

According to the present embodiment, the charging profile corresponding to the battery of the model number incorporated in the electronic device is selected from the plurality of charging profiles stored in the nonvolatile memory, based on the selection information. Then, the charging control of the battery is performed, based on the charging profile thus selected. Thus, appropriate charging control according to the model number of the battery incorporated in the electronic device can be implemented.

In the present embodiment, the selection information may be stored in a nonvolatile memory.

Thus, the selection information is stored in the nonvolatile memory, which can hold the stored content even when there is no power supply from outside, and the charging profile corresponding to the battery incorporated in the electronic device is selected, based on the selection information, and the battery can be charged accordingly.

In the present embodiment, the selection information may be set, based on the terminal setting of a circuit device used in the charging device.

Thus, the charging profile corresponding to the battery incorporated in the electronic device is selected, based on the selection information set by the terminal of the circuit device, and the battery can be charged accordingly.

In the present embodiment, the selection information is set at the time of manufacturing the electronic device or at the time of battery replacement.

Thus, the charging profile corresponding to the battery incorporated in the electronic device is selected, based on the selection information set at the time of manufacturing the electronic device or at the time of battery replacement, and the battery can be charged accordingly.

In the present embodiment, the charging profile may include a voltage threshold for determining overcharging.

Thus, the determination of overcharging and the charging control based on the result of the determination can be implemented, using the voltage threshold for determining overcharging corresponding to the model number of the battery incorporated in the electronic device.

In the present embodiment, the charging profile may include setting information of the charging control flow.

Thus, the charging control of the battery in the charging control flow corresponding to the model number of the battery incorporated in the electronic device can be implemented.

In the present embodiment, the charging profile may include a target current value of constant-current charging.

Thus, constant-current charging can be performed with the target current value corresponding to the model number of the battery incorporated in the electronic device.

In the present embodiment, the charging profile may include a value of constant voltage of constant-voltage charging.

Thus, constant-voltage charging with the constant voltage corresponding to the model number of the battery incorporated in the electronic device can be performed.

In the present embodiment, the charging profile may include temperature management setting information for the charging of the battery.

Thus, charging with the temperature management setting corresponding to the model number of the battery incorporated in the electronic device can be performed.

In the present embodiment, the charging profile may include management setting information based on a charging history of the battery.

Thus, management setting based on an appropriate charging history according to the model number of the battery incorporated in the electronic device can be implemented.

In the present embodiment, the charging device may include a power feeding circuit that supplies power to a power feeding target device, based on the battery voltage of the battery. The control circuit may control the power supply, using a discharging profile selected based on the selection information from a plurality of discharging profiles corresponding to batteries of a plurality of model numbers stored in the nonvolatile memory.

Thus, when performing power supply to the power feeding target device based on the battery voltage, the discharging control of the battery based on an appropriate discharging profile according to the model number of the battery is performed and the power supply can thus be implemented.

In the present embodiment, the discharging profile may include a voltage threshold for discharge stop determination.

Thus, when performing power supply to the power feeding target device by discharging the battery, the discharging of the battery can be stopped using the voltage threshold for discharge stop determination.

Also, according to the present embodiment, a method for manufacturing an electronic device including a replaceable battery and a charging device that charges the battery is provided, in which the charging device includes a nonvolatile memory, a control circuit that performs charging control according to a charging profile selected based on selection information from a plurality of charging profiles corresponding to batteries of a plurality of model numbers stored in the nonvolatile memory, and a charging circuit that charges the battery, based on the charging control. When a battery of a first model number is incorporated in the electronic device, selection information for selecting a first charging profile corresponding to the battery of the first model number is set in the charging device. When a battery of a second model number is incorporated in the electronic device, selection information for selecting a second charging profile corresponding to the battery of the second model number is set in the charging device.

According to the present embodiment, the charging profile corresponding to the model number of the battery incorporated in the electronic device is read from the nonvolatile memory, and the charging control of the battery can be performed, based on the read charging profile.

Also, according to the present embodiment, a battery replacement method for an electronic device including a replaceable battery and a charging device that charges the battery is provided, in which the charging device includes a nonvolatile memory, a control circuit that performs charging control according to a charging profile selected based on selection information from a plurality of charging profiles corresponding to batteries of a plurality of model numbers stored in the nonvolatile memory, and a charging circuit that charges the battery, based on the charging control by the control circuit. When the battery of the electronic device is changed from a battery of a first model number to a battery of a second model number, the selection information for selecting a second charging profile corresponding to the battery of the second model number is set in the charging device instead of selection information for selecting a first charging profile corresponding to the battery of the first model number.

According to the present embodiment, when replacing the battery of the electronic device in which the battery of the first model number is incorporated, the battery of the second model number can be incorporated in the electronic device instead of the battery of the first model number. When charging the battery, the charging profile corresponding to the battery of the second model number is read from the nonvolatile memory, and the charging control of the battery can be performed, based on the read charging profile.

While the embodiment has been described in detail above, a person skilled in the art can readily understand that many modifications can be made without substantially departing from the novel matters and effects of the present disclosure. Therefore, all such modifications are deemed to be included in the scope of the present disclosure. For example, a term described at least once together with a different term having a broader meaning or the same meaning in the specification or the drawings can be replaced with the different term anywhere in the specification or the drawings. Also, all combinations of the present embodiment and the modifications are also included in the scope of the present disclosure. Moreover, the configurations, operations, and so on of the electronic device and the charging device are not limited to those described in the present embodiment, and various modifications can be made.

## Claims

1. An electronic device comprising:
a replaceable battery; and
a charging device configured to charge the battery,
the charging device comprising:
a nonvolatile memory;
a control circuit configured to perform charging control according to a charging profile selected based on selection information, from a plurality of charging profiles corresponding to batteries of a plurality of model numbers stored in the nonvolatile memory; and
a charging circuit configured to charge the battery, based on the charging control.

2. The electronic device according to claim 1, wherein
the selection information is stored in the nonvolatile memory.

3. The electronic device according to claim 1, wherein
the selection information is set, based on a terminal setting of a circuit device used in the charging device.

4. The electronic device according to claim 1, wherein
the selection information is set at the time of manufacturing the electronic device or at the time of replacing the battery.

5. The electronic device according to claim 1, wherein
the charging profile includes a voltage threshold for determining overcharging.

6. The electronic device according to claim 1, wherein
the charging profile includes setting information of a charging control flow.

7. The electronic device according to claim 1, wherein
the charging profile includes a target current value of constant-current charging.

8. The electronic device according to claim 1, wherein
the charging profile includes a value of a constant voltage of constant-voltage charging.

9. The electronic device according to claim 1, wherein
the charging profile includes temperature management setting information for the charging of the battery.

10. The electronic device according to claim 1, wherein
the charging profile includes management setting information based on a charging history of the battery.

11. The electronic device according to claim 1, wherein
the charging device includes a power feeding circuit configured to supply power to a power feeding target device, based on a battery voltage of the battery, and
the control circuit controls the power supply according to a discharging profile selected based on the selection information from a plurality of discharging profiles corresponding to batteries of a plurality of model numbers stored in the nonvolatile memory.

12. The electronic device according to claim 11, wherein
the discharging profile includes a voltage threshold for discharge stop determination.

13. A method for manufacturing an electronic device including a replaceable battery and a charging device configured to charge the battery,
the charging device including:
a nonvolatile memory;
a control circuit configured to perform charging control according to a charging profile selected based on selection information, from a plurality of charging profiles corresponding to batteries of a plurality of model numbers stored in the nonvolatile memory; and
a charging circuit configured to charge the battery, based on the charging control,
the method comprising:
setting, in the charging device, the selection information for selecting a first charging profile corresponding to a battery of a first model number when the battery of the first model number is incorporated in the electronic device; and
setting, in the charging device, the selection information for selecting a second charging profile corresponding to a battery of a second model number when the battery of the second model number is incorporated in the electronic device.

14. A battery replacement method for an electronic device including a replaceable battery and a charging device configured charge the battery,
the charging device including:
a nonvolatile memory;
a control circuit configured to perform charging control according to a charging profile selected based on selection information, from a plurality of charging profiles corresponding to batteries of a plurality of model numbers stored in the nonvolatile memory; and
a charging circuit configured to charge the battery, based on the charging control by the control circuit,
the method comprising:
setting, in the charging device, the selection information for selecting a second charging profile corresponding to a battery of a second model number instead of the selection information for selecting a first charging profile corresponding to a battery of a first model number battery, when the battery of the electronic device is changed from the battery of the first model number to the battery of the second model number.
